## Europäisches Patentamt
## European Patent Office
## Office européen des brevets

(19)

(11) Veröffentlichungsnummer: **0 054 563**
**B2**

(12)
# NEUE EUROPÄISCHE PATENTSCHRIFT

(45) Veröffentlichungstag der neuen Patentschrift:
**31.08.88**

(21) Anmeldenummer: **81901816.9**

(22) Anmeldetag: **26.06.81**

(86) Internationale Anmeldenummer:
**PCT/AT 81/00016**

(87) Internationale Veröffentlichungsnummer:
**WO 82/00149 (21.01.82 Gazette 82/03)**

(51) Int. Cl.⁴: **C 08 G 63/00, C 08 G 63/24**

(54) **VERFAHREN ZUR HERSTELLUNG AROMATISCHER POLYESTER SOWIE VORRICHTUNG ZUR DURCHFÜHRUNG DIESEN VERFAHRENS.**

(30) Priorität: **26.06.80 AT 3344/80**

(43) Veröffentlichungstag der Anmeldung:
**30.06.82 Patentblatt 82/26**

(45) Bekanntmachung des Hinweises auf die Patenterteilung:
**29.08.84 Patentblatt 84/35**

(45) Bekanntmachung des Hinweises auf die Entscheidung über den Einspruch:
**31.08.88 Patentblatt 88/35**

(84) Benannte Vertragsstaaten:
**AT CH DE FR GB LI SE**

(56) Entgegenhaltungen:
**DE-A-2 470 716**
**DE-A-2 728 849**
**FR-A-2 356 685**
**US-A-3 216 970**
**US-A-4 201 855**

**Die Akte enthält technische Angaben, die nach dem Eingang der Anmeldung eingereicht wurden und die nicht in dieser Patentschrift enthalten sind.**

(73) Patentinhaber: **ISOVOLTA Österreichische Isolierstoffwerke Aktiengesellschaft, Industriezentrum- Süd, A-2351 Wiener Neudorf (AT)**

(72) Erfinder: **RIEDER, Werner, Schrutkagasse 70, A-1130 Wien (AT)**

(74) Vertreter: **Stampfer, Heinz, ISOVOLTA Österreichische Isolierstoffwerke AG Industriezentrum- Süd, A-2351 Wiener Neudorf (AT)**

**EP 0 054 563 B2**

LIBER, STOCKHOLM 1988

## Beschreibung

Die Erfindung betrifft ein Verfahren zur Herstellung aromatischer Polyester durch Polykondensation von Diphenolen, die ein zentrales Kohlenstoffatom aufweisen, derart, daß an dieses Kohlenstoffatom gebundene Gruppen in ihrer freien Drehung gehindert sind, mit Chloriden aromatischer Dicarbonsäuren wie Isophthalsäure und/oder Terephthalsäure nach den Zweiphasengrenzflächen-Polykondensationsverfahren, sowie eine Vorrichtung zur Durchführung dieses Verfahrens.

Bei einem in der US-PS 3 216 970 beschriebenen Zweiphasengrenzflächen-Polykondensationsverfahren wird aus der wäßrigen Phase, bestehend aus einer Lösung aus dem Diphenol, Alkalihydroxyd zur Bildung des Diphenolates im stöchiometrischen Verhältnis oder in geringem Überschuß, sowie einem Phasentransferkatalysator in Wasser und gegebenenfalls einem organischen Lösungsmittel als Lösungsvermittler mit der organisch-flüssigen Phase, bestehend aus einer Lösung des Säurechlorids in einem chlorierten Lösungsmittel eine feine Dispersion hergestellt, wobei das mit Hilfe des Phasentransferkatalysators in die organisch-flüssige Phase übergeführte Diphenolat mit Säurechlorid zur Bildung des Polyesters eine Polykondensationsreaktion eingeht und der gebildete Polyester in der organischen Phase gelöst wird. Bei den in dieser US-PS beschriebenen Beispielen ist die an den synthetisierten Polyestern erreichte Inherente Viskosität nicht sehr hoch. Dies ist insbesondere dann der Fall, wenn es sich um Polyester handelt, zu deren Synthesen Diphenolate eingesetzt werden, die ein zentrales Kohlenstoffatom aufweisen, derart, daß an dieses Kohlenstoffatom gebundene Gruppen in ihrer freien Drehung gehindert sind.

Der Erfindung liegt nun die Aufgabe zugrunde, ein Verfahren zur Herstellung von Polyestern der obengenannten Art anzugeben, bei dem unter sonst gleichen Bedingungen eine höhere Inherente Viskosität des synthetisierten Polyesters erzielt wird als bei den bekannten Verfahren.

Die der Erfindung zugrundeliegende Aufgabe wird durch ein Verfahren zur Herstellung aromatischer Polyester durch Polykondensation von Diphenolen, die ein zentrales Kohlenstoffatom auweisen, derart, daß an dieses Kohlenstoffatom gebundene Gruppen in ihrer freien Drehung gehindert sind, mit Chloriden aromatischer Dicarbonsäuren wie Isophthalsäure und/oder Terephthalsäure nach dem Zweiphasengrenzflächen-Polykondensationsverfahren gelöst, wobei aus der wäßrigen Phase, bestehend aus einer Lösung aus dem Diphenol, Alkalihydroxyd zur Bildung des Diphenolates im stöchiometrischen Verhältnis oder in geringem Überschuß, sowie einem Phasentransferkatalysator in Wasser und gegebenenfalls einem organischen Lösungsmittel als Lösungsvermittler mit der organisch-flüssigen Phase, bestehend aus einer Lösung des Säurechlorids in einem chlorierten Lösungsmittel eine feine Dispersion hergestellt wird, wobei das mit Hife des Phasentransferkatalysators in die organisch-flüssige Phase übergeführte Diphenolat mit Säurechlorid zur Bildung des Polyesters eine Polykondensationsreaktion eingeht und der gebildete Polyester in der organischen Phase gelöst bleibt, welches Verfahren dadurch gekennzeichnet ist, daß in einen ersten Verfahrensschritt eine Dispersion aus der wäßrigen Phase und einem chlorierten organischen Lösungsmittel hergestellt und in einem Kreislauf, in dem ein Reaktionskessel und eine Dispergiereinrichtung eingeschaltet sind, geführt wird, und daß in einem zweiten Verfahrensschritt das in einem weitgehend wasserfreien chlorierten organischen Lösungsmittel gelöste Säurechlorid danach diesem Kreilauf an einer in Strömungsrichtung vor der Dispergiereinrichtung gelegenen Stelle laufend zugeführt wird. Die Teilmenge des Lösungsmittels der einzusetzenden organisch-flüssigen Phase, die zur Herstellung einer Dispersion des Reaktionsgemisches dient, enthält kein Säurechlorid und muß daher - im Gegensatz zu dem zum Auflösen des zuzuführenden Säurechlorids dienenden Lösungsmittels - auch keinen hohen Reinheitsanforderungen insbesondere hinsichtlich einer weitgehenden Wasserfreiheit genügen.

Gemäß einer vorteilhaften Ausgestaltung der Erfindung ist das erfindungsgemäße Verfahren dadurch gekennzeichnet, daß zur Herstellung der Dispersion aus der wäßrigen Phase und einer Teilmenge des einzusetzenden chlorierten Lösungsmittels der organisch-flüssigen Phase das Gemenge aus diesen beiden Komponenten durch die Dispergiereinrichtung geführt wird.

Nach einer anderen vorteilhaften Ausgestaltung der Erfindung wird das Reaktionsgemisch in der Dispergiereinrichtung durch eine oder mehrere hintereinander geschaltete Mischstufen geführt, wobei in jeder Mischstufe das Gemenge in eine oder mehrere Teilströmungen aufgeteilt wird, die Teilströmungen mit ihren Strömungsbegrenzungen quer zu ihren Hauptströmungsrichtungen Bewegungen mit mittleren Geschwindigkeiten von größer als 5 m/s ausführen und die Teilströmungen in einer mit zumindest einem Ausgangskanal versehenen Mischkammer münden, in der die kinetische Energie des Gemenges auf einen gegenüber ihren Höchstwert geringen Wert herabgesetzt wird, wobei die in der Mischkammer strömenden Gemengebereiche sich zumindest nahezu periodisch verändernden Strömungsverhältnissen ausgesetzt sind.

Eine derartige Dispergiereinrichtung gehört bei der Herstellung hochmolekularer Polyester nach dem Phasengrenzflächenverfahren zum Stand der Technik (DE-A-2 728 849).

Der Erfindung liegt ferner die Aufgabe zugrunde, eine vorteilhafte Vorrichtung zur Durchführung des erfindungsgemäßen Verfahrens anzugeben.

Diese Aufgabe wird in der erfindungsgemäßen Vorrichtung gelöst, die gekennzeichnet ist durch einen Reaktionskessel mit Rührwerk, einer Dispergiereinrichtung, deren Ein- bzw. Ausgang jeweils über eine Rohrleitung mit dem Reaktionskessel verbunden ist, und eine in der vom Reaktionskessel zum Eingang der Dispergiereinrichtung führenden Rohrleitung eingeschaltete Einrichtung zur Eingabe des Säurechlorids.

Die Vorrichtung zur Durchführung der Polykondensation weist einen Kessel 1 auf mit einem Kühlmantel 2 und einem aus einem hochtourigen Motor 3 und einem Turborührer 4 bestehenden Rührwerk. Vom Kesselboden führt ein Rohrstutzen 5 weg, von dem eine Rohrleitung 6 abzweigt, die zum Eingang 7 einer Dispergiereinrichtung 8 führt, wobei in dem Rohrstutzen 5 beiderseits dieser Abzweigung Absperrhähne 9 und 10 angeordnet sind. In der Rohrleitung 6 ist ferner eine Einrichtung 11 mit Dosierpumpe 12 zur dosierten Zufuhr einer Reaktionskomponente sowie ein Thermometer 13 eingeschaltet. Dar Ausgang 14 der Dispergiereinrichtung 8 ist über eine weitere Rohrleitung 15 mit dem Kesselinnenraum verbunden. Im Kesseldeckel ist eine verschließbare Beschickungsöffnung 16 angeordnet.

Die Dispergiereinrichtung 8 ist mit einer durch einen Motor 17 angetriebenen und in einem Gehäuse 18 gelagerten Welle 19 versehen, auf welcher drei mit Radialschlitzen versehene Rotorscheiben 20 aufgesetzt sind. Zu jeder Rotorscheibe 20 ist - in Strömungsrichtung 21 nachgeordnet - eine mit der Gehäusewand verbundene, mit Radialschlitzen versehene stationäre Scheibe 22 vorgesehen, derart, daß jede Rotorscheibe 20 mit der ihr nachgeordneten stationären Scheibe 22 eine Mischstufe ergibt.

**Beispiel 1**

In einem beheizbaren Gefäß werden als einzusetzende wäßrige Phase 4,0 Mol (1160 g) 1,1-Bis(4-hydroxyphenyl)-1-phenyläthan (Schmelzpunkt. 189 - 191° C) in 8 l Wasser und 2 l Isopropanol mit 8,3 Mol (322 g) Natriumhydroxyd durch Erwärmen gelöst.

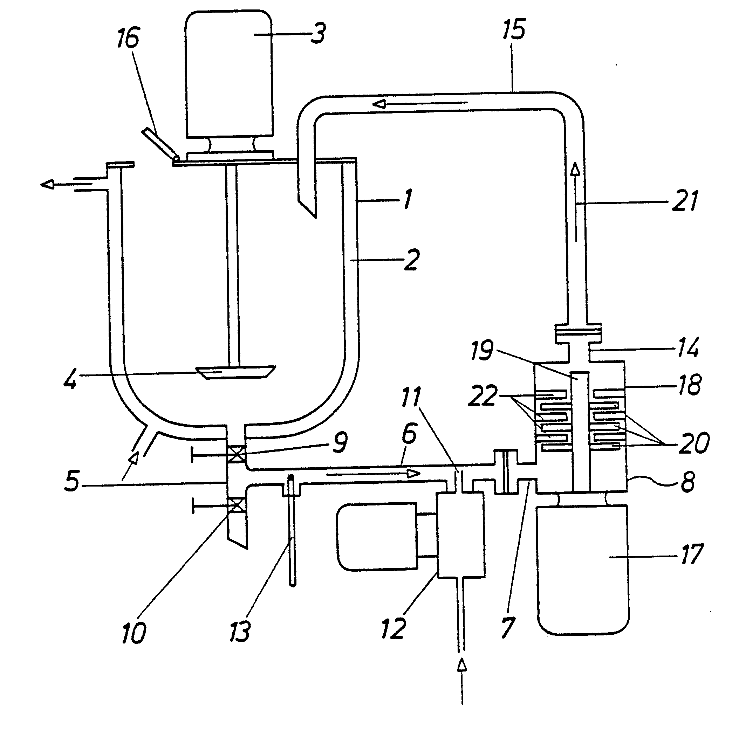

Die wieder erkaltete Lösung wird nun in den Kessel 1 der in der Zeichnung beschriebenen Vorrichtung eingebracht, der Lösung 10 l destilliertes 1,2-Dichloräthan zugegeben und schließlich nach Öffnen des Absperrhahnes 9 das Rührwerk, die Dispergiereinrichtung 8 und die Wasserkühlung im Kühlmantel 2 eingeschaltet. Wegen ihrer Pumpwirkung wird dabei durch die Dispergiereinrichtung 8 eine ständige Strömung des eingesetzten Flüssigkeitsgemisches in Richtung 21 aufrechtgehalten. Nach etwa 2 min ist durch die Wirkung des Rührwerks und der Dispergiereinrichtung 8 das eingesetzte Flüssigkeitsgemisch in eine feine Dispersion übergeführt.

Jetzt werden dieser Dispersion als Phasentransferkatalysator 0,2 Mol (46 g) Benzyltriäthylammoniumchlorid gelöst in 300 ml Wasser zugesetzt und kurz darauf - bei weiter eingeschaltetem Rührwerk und Dispergiereinrichtung 8 - über die Zuführeinrichtung 11 eine Lösung aus 2,0 Mol (406 g) Isophthalsäuredichlorid und 2,0 Mol (406 g) Terephthalsäuredichlorid in 2 absolutiertem 1, 2-Dichloräthan mittels der Dosierpumpe 12 während 60 min kontinuierlich zugeführt und schließlich das Rührwerk und die Dispergiereinrichtung in einer Nachreaktionszeit noch während weiterer 60 min weiter laufen gelassen, wobei die Temperatur der Dispersion durch die Kühlung unter 25° C gehalten und mit dem Thermometer 23 laufend kontrolliert wird.

Damit ist die Polykondensationsreaktion ab geschlossen, der gebildete Polyester in der organisch-flüssigen Phase gelöst.

Die Dispersion wird nun durch Öffnung des Absperrhahnes 10 aus der Vorrichtung in ein Trenngefäß abgelassen, in dem sich die beiden Phasen in relativ kurzer Zeit trennen. Die die or ganisch-flüssige Phase bildende Polyesterlösung wird nun abgetrennt und mit Wasser zur Entfernung ionischer Bestandteile gut gewaschen. Der Polyester wird dann durch Zugabe von Isopropanol aus dieser Lösung gefällt, abfiltriert und aus ihm durch Waschen mit Isopropanol, Wasser und nochmals Isopropanol eventuell noch vorhandene ionische Verunreinigungen entfernt. Anschließend wird das Polymer in einem Vakuumtrockenschrank bei 80° C bis zur Gewichtskonstanz getrocknet.

Man erhält 1586 g (das sind 94,4 % der nach der Theorie möglichen Menge) eines farblosen, halogenfreien Polyesters mit einer Inherente Viskosität von 1,84 dl/g.

Die Inherente Viskosität (I. V.) wird bei 30° C an einer Lösung von 0,5 g Polymer in 100 ml Lösungsmittel (60 % Phenol, 40 % Tetrachloräthan) mit Hilfe eines Ubbelohde-Viskosimeters (Kapilarkonstante 0,01) bestimmt.

$$I.V. = \frac{\ln \eta_{rel}}{c}$$

Die Wirksamkeit der Dispergiereinrichtung 8 ergibt sich daraus, daß in jeder Mischstufe ein durch sie hindurchtretendes aus zwei nicht mischbaren flüssigen Phasen bestehendes Flüssigkeitsgemisch bei seinem Durchtritt durch die Radialschlitze der rotierenden Rotorscheibe 20 auf Geschwindigkeiten gebracht werden, deren senkrecht zur Achsrichtung verlaufenden Komponenten Größen von mehr als 5 m/s haben. Im Raum zwischen der Rotorscheibe 20 und der nachgeordneten stationären Scheibe 22, der die Mischkammer bildet, wird die kinetische Energie des Flüssigkeitsgemisches, bevor es durch die Radialschlitze in der stationären Scheibe 22 die Mischkammer verläßt, abrupt auf einen sehr niedrigen Wert gebracht, wobei die in der Mischkammer strömenden Gemischbereiche sich zumindest nahezu periodisch verändernden Strömungsverhältnissen ausgesetzt sind. Dadurch wird in der Mischkammer eine sehr intensive Turbulenz erzeugt, welche das Entstehen bzw. die Verbesserung einer sehr feinen Dispersion im Flüssigkeitsgemisch bewirkt.

**Beispiel 2**

Zur Herstellung der wäßrigen Phase werden 2,0 Mol (700 g) 9,9-Bis(4-hydroxyphenyl)-fluoren (Schmelzbereich: 227 - 229° C) in 4 Wasser und 2 l Dioxan mit 4,15 Mol (166 g) Natriumhydroxyd, ähnlich wie im Beispiel 1 angegeben, durch schwaches Erwärmen gelöst. Die wieder erkaltete Lösung wird in den Kessel 1 eingebracht und ihr 7 l destilliertes 1,2-Dichloräthan zugegeben. Darauf wird - jeweils analog wie in Beispiel 1 beschrieben - das eingesetzte Flüssigkeitsgemisch in eine feine Dispersion übergeführt, als Phasentransferkatalysator 0,1 Mol (23 g) Benzyltriäthylammoniumchlorid, gelöst in 100 ml Wasser, zugegeben, über die Zufuhreinrichtung 11 eine Lösung aus 1 Mol (203 g) Isophthalsäuredichlorid und 1 Mol (203 g) Terephthalsäuredichlorid in 1 l absolutiertem 1,2-Dichloräthan während 30 min kontinuierlich zugesetzt und während weiterer 30 min einer Nachreaktion unterworfen.

Von der aus der Vorrichtung abgelassenen Dispersion, in welcher der gebildete Polyester in der organisch-flüssigen Phase gelöst ist, wird nun, so wie gemäß Beispiel 1, die organisch-flüssige Phase abgetrennt, gewaschen und schließlich unter kräftigem Rühren aus ihr durch langsame Zugabe von Aceton und Methanol der Polyester gefällt. Dieser Polyester wird abfiltriert und aus ihm durch Waschen mit Äthanol, Wasser und nochmals Äthanol eventuell noch vorhandene ionische Verunreinigungen entfernt. Das Polymer wird anschließend in einem Vakuumtrockenschrank bei 80° C bis zur Gewichtskonstanz getrocknet.

Man erhält 900 g (das sind 94 % der nach der Theorie möglichen) eines farblosen, halogenfreien Polyesters mit einer inherenten Viskosität von 1,67 dl/g (bestimmt nach dem in Beispiel 1 angegebenen Meßverfahren).

Mit dem erfindungsgemäßen Verfahren können insbesondere unter Verwendung der erfindungsgemäßen Vorrichtung hochtemperaturbeständige aromatische Polyester mit hohem Molekulargewicht synthetisiert werden, aus denen man z. B. aus der Lösung gegossene Folien oder durch Extrusion oder Spritzguß aus der Schmelze hergestellte Folien, Platten bzw. Teile herstellt, die man insbesondere auch für Elektroisolierzwecke in vielen Fällen dort einsetzen kann, wo eine hohe Dauertemperaturbeständigkeit benötigt wird.

Weitere wichtige Anwendungen liegen dort, wo ein hoher Sauerstoffindex des Kunststoffs gefordert wird. Ein hoher Sauerstoffindex von Kunststoffen wird nämlich in zunehmendem Maße speziell in solchen Anwendungen verlangt, bei denen bei einer thermischen Zersetzung des eingesetzten Kunststoffs, wie sie bei einem Defekt oder Unfall, insbesondere aber auch im Falle eines Brandes eintreten kann, die Rauchentwicklung sowie die Giftigkeit der entstehenden Zersetzungsprodukte möglichst gering sein sollen.

**Patentansprüche**

1. Verfahren zur Herstellung aromatischer Polyester durch Polykondensation von Diphenolen, die ein zentrales Kohlenstoffatom aufweisen, derart, daß an dieses Kohlenstoffatom gebundene Gruppen in ihrer freien Drehung gehindert sind, mit Chloriden aromatischer Dicarbonsäuren wie Isophthalsäure und/oder Terephthalsäure nach dem Zweiphasengrenzflächen-Polykondensationsverfahren, wobei aus der wäßrigen Phase, bestehend aus einer Lösung aus dem Diphenol, Alkalihydroxyd zur Bildung des Diphenolates im stöchiometrischen Verhältnis oder in geringem Überschuß, sowie einem Phasentransferkatalysator in Wasser und gegebenenfalls einem organischen Lösungsmittel als Lösungsvermittler mit der organisch-flüssigen Phase, bestehend aus einer Lösung des Säurechlorids in einem chlorierten Lösungsmittel eine feine Dispersion hergestellt wird, wobei das mit Hife des Phasentransferkatalysators in die organisch-flüssige Phase übergeführte Diphenolat mit Säurechlorid zur Bildung des Polyesters eine Polykondensationsreaktion eingeht und der gebildete Polyester in der organischen Phase gelöst bleibt, dadurch gekennzeichnet, daß in einen ersten Verfahrensschritt eine Dispersion aus der wäßrigen Phase und einem chlorierten organischen Lösungsmittel hergestellt und in einem Kreislauf, in dem ein Reaktionskessel und eine Dispergiereinrichtung eingeschaltet sind, geführt wird, und daß in einem zweiten Verfahrensschritt das in einem weitgehend wasserfreien chlorierten organischen Lösungsmittel gelöste Säurechlorid danach diesem Kreilauf an einer in Strömungsrichtung vor der Dispergiereinrichtung gelegenen Stelle laufend zugeführt wird.

2. Verfahren nach Anspruch 1, dadurch gekennzeichnet, daß zur Herstellung der Dispersion aus der wäßrigen Phase und dem chlorierten Lösungsmittel ein Gemenge aus diesen beiden Komponenten durch die Dispergiereinrichtung des Kreislaufs geführt wird.

3. Verfahren nach einem der Ansprüche 1 oder 2, dadurch gekennzeichnet, daß das Reaktionsgemisch in der Dispergiereinrichtung durch eine oder mehrere hintereinander geschaltete Mischstufen geführt wird, wobei in jeder Mischstufe das Gemenge in mehrere Teilströmungen aufgeteilt wird, die Teilströmungen mit ihren Strömungsbegrenzungen quer zu ihren Hauptströmungsrichtungen Bewegungen mit mittleren Geschwindigkeiten von größer als 5 m/s ausführen und die Teilströmungen in einer mit zumindest einem Ausgangskanal versehenen Mischkammer münden, in der die kinetische Energie des Gemisches auf einem gegenüber ihrem Höchstwert geringen Wert herabgesetzt wird, wobei die in der Mischkammer strömenden Gemischbereiche sich zumindest nahezu periodisch verändernden Strömungsverhältnissen ausgesetzt sind.

4. Vorrichtung zur Durchführung des Verfahrens nach einem der Ansprüche 1 bis 3, gekennzeichnet durch einen Reaktionskessel (1) mit Rührwerk (3, 4), einer Dispergiereinrichtung (8), deren Ein- bzw. Ausgang (7, 14) jeweils über eine Rohrleitung (6, 15) mit dem Reaktionskessel (1) verbunden ist und eine in der vom Reaktionskessel (1) zum Eingang (7) der Dispergiereinrichtung (8) führenden Rohrleitung (6) eingeschaltete Einrichtung (11) zur Eingabe des Säurechlorids.

## Claims

1. Process for the preparation of aromatic polyesters by polycondensation of diphenols having a central carbon atom of the kind that groups bound to this carbon atom are hindered in their free rotation, with chlorides of aromatic dicarboxylic acids such as isophthalic acid and/or terephthalic acid, using the two-phase boundary polycondensation process, wherein a fine dispersion is prepared from the aqueous phase, consisting of a solution of the diphenol, alkali metal hydroxide for forming the diphenolate in the stoichiometric ratio or in slight excess, and a phase transfer catalyst in water and, optionally, an organic solvent as the solubilising agent, and from the liquid organic phase, consisting of a solution of the acid chloride in a chlorinated solvent, the diphenolate transferred into the liquid organic phase with the aid of the phase transfer catalyst undergoing a polycondensation raction with the acid chloride to form the polyester and the polyester formed remaining dissolved in the organic phase, characterised in that in a first process stage a dispersion of the aqueous phase and a chlorinated organic solvent is produced and is passed through a circulation system, in which a reaction kettle and a dispersing device are incorporated, and that in a second process stage the acid chloride dissolved in a substantially anhydrous chlorinated solvent, is thereupon fed continuously into this circulation system at a point located upstream of the dispersing device.

2. Process according to Claim 1, characterised in that to prepare the dispersion from the aqueous phase and the chlorinated solvent a mixture of these two components is passed through the dispersing device.

3. Process according to one of Claims 1 to 2, characterised in that in the dispersing device the reaction mixture is passed through one or more mixing stages arranged in series, the mixture is divided, in each mixing stage, into a plurality of part-streams, the part-streams execute, with their flow boundaries, movements with mean velocities of greater than 5 m/s transversely to their principal directions of flow, and the part-streams open into a mixing chamber, provided with at least one outlet channel, in which chamber the kinetic energy of the mixture is lowered to a value which is small compared to its maximum value, the mixing zones flowing in the mixing chamber being exposed to at least approximately periodically changing flow conditions.

4. Device for carrying out the process according to one of Claims 1 to 3, characterised by a reaction kettle (1) with stirrer unit (3, 4), a dispersing device (8) whose inlet and outlet (7, 14) are each connected to the reaction kettle (1) via a pipeline (6, 15) and a device (11) for introducing the acid chloride, this device being inserted in the pipeline (6) leading from the reaction kettle (1) to the inlet (7) of the dispersing device (8).

## Revendications

1. Procédé de préparation de polymères aromatiques par polycondensation de diphénols avec des chlorures de diacides aromatiques tels que l'acide isophtalique et/ou l'acide térephtalique du type de la polycondensation interfaciale diphasique, ledit diphénol renfermant un atome de carbone central, de sorte que des groupes liés audit atome de carbone soient empêchés de tourner librement, procédé dans lequel on prépare une dispersion fine à partir de la phase aqueuse constituée d'une solution du diphénol, d'un hydroxyde alcalin en vue de la formation du diphénolate en proportion stoechimétrique ou en un léger excés, ainsi que d'un catalyseur de transfert de phase dans de l'eau et, le cas échéant, d'un solvant organique agissant comme intermédiaire de solution du chlorure dans un solvant chloré avec la phase organique liquide constituée d'une solution du chlorure d'acide dans un solvant chlore, procédé dans lequel le diphénolate transféré dans la phase liquide organique à l'aide dudit catalyseur de transfert de phase entre en réaction de polycondensation avec le chlorure afin de former le polyester qui reste en solution dans la phase organique, procédé caractérisé en ce que, dans une première étape, on forme une dispersion à partir de la phase aqueuse et d'un solvant organique chloré et qu'on fait circuler cette dispersion dans un circuit comprenant un réacteur et un dispositif de dispersion, et en ce que, dans une deuxième étape, on introduit dans ce circuit, en un point situé en amont du dispositif de dispersion, par rapport à la direction d'écoulement, le chlorure dissous dans un solvant organique chloré sensiblement exempt d'eau.

2. Procédé selon la revendication 1, caractérisé en ce que, pour préparer la dispersion à partir de la phase aqueuse et le solvant chloré, on fait passer un mélange de ces deux composants à travers ledit dispositif de dispersion du circuit précité.

3. Procédé selon la revendication 1 ou 2, caractérisé en ce que l'on fait passer le mélange réactionnel dans le dispositif de dispersion par un ou plusieurs étages de mélange disposés l'un derrière l'autre, le melange étant dans chaque étage de mélange subdivisé en plusieurs écoulements partiels, les écoulements partiels effectuant par leurs délimitations d'écoulement, des mouvements transversaux à la direction principale de leur écoulement avec des vitesses moyennes supérieures à 5 m/s, et les écoulements partiels débouchant dans une chambre de mélange pourvue d'au moins un canal de sortie dans laquelle l'énergie cinétique du mélange est abaissée à une valeur plus faible que leurs valeurs maximum, les zones de mélange s'écoulant dans la chambre de mélange étant exposées de façon au moins periodique à des conditions d'écoulement variables.

4. Dispositif pour mise en oeuvre du procédé selon l'une quelconque des revendications 1 à 3, caractérisé par une cuve de réaction (1) comportant un équipement d'agitation (3, 4), une installation de dispersion (8) dont l'entrée et la sortie (7, 14) sont reliées chaque fois par une conduite tubulaire (6, 15) avec la cuve de réaction (1) et un appareil (11) d'introduction du chlorure d'acide intercalée dans la conduite tubulaire (16) conduisant de la cuve de réaction (1) à l'entrée (7) de l'installation de dispersion (8).